# EUROPÄISCHE PATENTANMELDUNG

(11) **EP 2 012 034 A2**
(43) Veröffentlichungstag der Anmeldung: **07.01.2009**
(21) Anmeldenummer: 08010444.1
(22) Anmeldetag: 09.06.2008
(51) Int. Cl.: F16D 1/10

(54) **Kupplungsaggregat**

(30) Priorität: 02.07.2007 DE 102007030721
(71) Anmelder: LuK Lamellen und Kupplungsbau Beteiligungs KG, 77815 Bühl (DE)
(72) Erfinder: Daelen, Stephan, 76534 Baden-Baden (DE); Hoppe, Marcus, 77855 Achern (DE)

(57) **Zusammenfassung**

Kupplungsaggregat, das aus wenigstens zwei Untereinheiten besteht, wobei die eine Untereinheit mit der Abtriebswelle eines Motors verbindbar und die andere Untereinheit getriebeseitig vormontierbar ist und beide Untereinheiten über eine axiale Steckverbindung, die ineinander greifende Profilierungen und Gegenprofilierungen umfasst, miteinander koppelbar sind.

## Beschreibung

Die Erfindung betrifft ein Kupplungsaggregat bzw. ein Kupplungssystem, das aus wenigstens zwei Untereinheiten besteht, wobei die eine Untereinheit mit der Abtriebswelle eines Motors verbindbar und die andere Untereinheit getriebeseitig vormontierbar ist und beide Untereinheiten über eine axiale Steckverbindung, die ineinander greifende Profilierungen und Gegenprofilierungen umfasst, miteinander koppelbar sind.

Kupplungsaggregate, die in zwei Untereinheiten aufgeteilt sind und erst beim Zusammenbau von Motor und Getriebe antriebsmäßig miteinander gekoppelt werden, sind beispielsweise durch die DE 10 2005 037 514 A1, die DE 10 2005 027 608 A1 und die WO 2007/000151 A2 vorgeschlagen worden.

Der vorliegenden Erfindung lag die Aufgabe zugrunde, zwischen den beiden Untereinheiten eine Verbindung zu schaffen, die eine einwandfreie Drehmomentübertragung gewährleistet und durch einfaches axiales Zusammenfügen der beiden Untereinheiten herstellbar ist. Durch die erfindungsgemäße Verbindung sollen Anschlags- bzw. Klappergeräusche, insbesondere aufgrund von Torsionsschwingungen, Taumelschwingungen sowie Axialschwingungen von Bauteilen vermieden werden.

Gemäß der Erfindung wird dies unter anderem dadurch erzielt, dass zumindest einzelne der die Profilierungen und/oder Gegenprofilierungen bildenden, zahnförmigen Profile mit einem dämpfenden Material beschichtet sind. Die Beschichtungsdicke kann dabei derart bemessen sein, dass zwischen den Profilierungen und den Gegenprofilierungen ein geringfügiges oder praktisch kein umfangsmäßiges Spiel verbleibt. Zweckmäßig kann es jedoch auch sein, wenn die Schichtdicke des dämpfenden Materials derart dimensioniert wird, dass nach dem axialen Ineinanderschieben von Profilierungen und Gegenprofilierungen das dämpfende Material mit einer gewissen zumindest umfangsmäßigen elastischen Verformung bzw. elastischen Verspannung zwischen den ineinander greifenden Profilierungen aufgenommen ist.

Das dämpfende Material kann in vorteilhafter Weise aus wenigstens einem Kunststoff bestehen, der die entsprechenden mechanischen Eigenschaften aufweist. Der Kunststoff soll vorzugsweise eine gewisse Eigenelastizität aufweisen und hochtemperaturfest sein. Der Kunststoff soll zumindest über eine längere Zeit einer Umgebungstemperatur von wenigstens 100° C ohne wesentlichen Änderungen seiner mechanischen und thermischen Eigenschaften ausgesetzt werden können. In vorteilhafter Weise kann das dämpfende Material zumindest durch einen Elastomer, wie zum Beispiel Gummi bzw. Kautschuk, gebildet sein. So kann beispielsweise Silikon-Kautschuk, Ethylen-Acrylat-Kautschuk oder Fluorkautschuk zur Anwendung kommen. Für manche Anwendungsfälle kann es jedoch auch zweckmäßig sein, wenn die Beschichtung von Profilierungen und/oder Gegenprofilierungen zumindest teilweise aus einem Thermoplast bzw. thermoplastischen Elastomer oder Duroplast besteht.

Die Schichtdicke des zumindest auf einzelne, zahnförmige Profile der axialen Steckverbindung aufgebrachten Materials kann in der Größenordnung von 0,3 bis 1,5 mm liegen, vorzugsweise in der Größenordnung von 0,8 bis 1,2 mm.

Obwohl nur einzelne über den Umfang verteilte, zahnförmige Profile der Profilierungen und/oder der Gegenprofilierungen beschichtet sein können, ist es für viele Anwendungsfälle besonders vorteilhaft, wenn die gesamten Profilierungen und/oder die gesamten Gegenprofilierungen bzw. die diese bildenden, zahnförmigen Profile beschichtet sind. Zweckmäßig kann es auch sein, wenn lediglich Zahnflanken der zahnförmigen Profile beschichtet sind.

Für die Herstellung kann es besonders zweckmäßig sein, wenn das auf die Profilierungen und/oder Gegenprofilierungen aufgebrachte Material aufvulkanisiert ist.

Zur axialen Montage bzw. für das axiale Zusammenfügen der Profilierungen und Gegenprofilierungen kann es besonders zweckmäßig sein, wenn zumindest eine dieser Profilierungen mit einem Schmier- bzw. Gleitmittel versehen ist. Das Gleitmittel kann beispielsweise durch ein Gleitfett oder Gleitöl oder durch Aufbringung einer festen Gleitschicht oder einer Kombination dieser Mittel gebildet sein. Vorteilhaft kann es sein, wenn die Oberfläche des dämpfenden Materials zumindest partiell mit einem entsprechenden Gleitmittel versehen ist.

Die getriebeseitige Untereinheit umfasst vorzugsweise eine Doppelkupplung, die auf einer Getriebeeingangswelle zumindest axial abgestützt aufgenommen ist. Die motorseitige Untereinheit kann in vorteilhafter Weise einen Drehschwingungsdämpfer umfassen. Die durch das dämpfende Material zwischen den Profilierungen und Gegenprofilierungen bewirkte Verdrehsteifigkeit soll vorzugsweise größer als 150 Nm/° betragen. Die Verdrehsteifigkeit kann wesentlich höher als dieser Wert liegen. Für manche Anwendungsfälle kann es jedoch auch zweckmäßig sein, wenn diese Verdrehsteifigkeit kleiner ist als 150 Nm/°, wobei es dann zweckmäßig sein kann, wenn nach einem geringen Relativverdrehwinkel zum Beispiel in der Größenordnung von 0,2 bis 0,5° ein Anschlag bzw. eine praktisch starre Mitnahme wirksam wird.

Weitere zweckmäßige bauliche und funktionelle Weiterbildungen der Erfindung sind in Zusammenhang mit der folgenden Figurenbeschreibung näher erläutert.

Dabei zeigen:
- Figur 1: einen Halbschnitt durch ein Kupplungsaggregat,
- Figur 2: eine vergrößerte Darstellung der bei Figur 1 vorhandenen Steckverbindung,
- Figur 3: ein die Steckverbindung bildendes Bauteil.

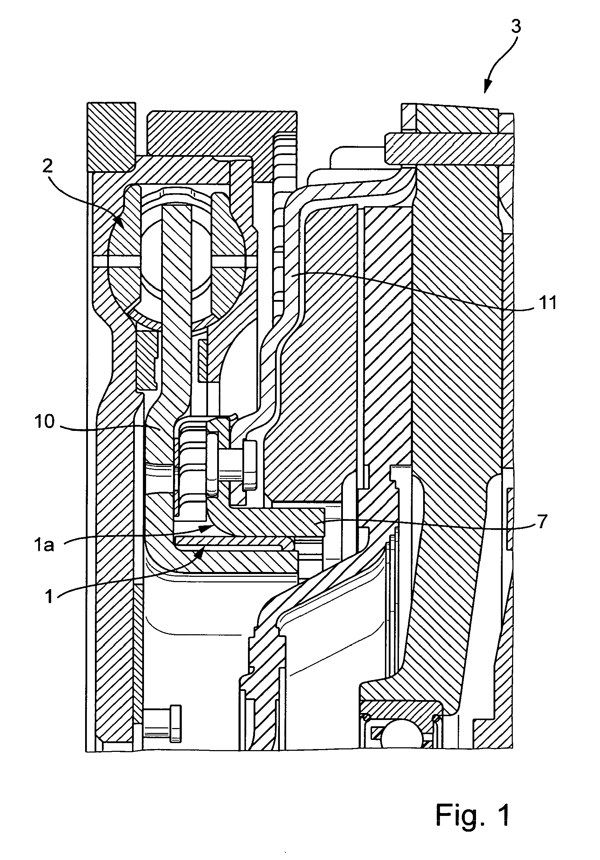

In Figur 1 ist eine Antriebsverbindung 1 erkennbar, die als axiale Steckverbindung 1a ausgebildet ist. Über diese axiale Steckverbindung 1a sind zwei Untereinheiten 2 und 3 miteinander verbindbar, von denen die Untereinheit 2 einen Dämpfer umfasst, der mit der Abtriebswelle einer Brennkraftmaschine verbindbar ist, und die Untereinheit 3 zum Beispiel eine Doppelkupplung beinhaltet, die getriebeseitig vormontierbar ist. Derartige Doppelkupplungen sind durch den eingangs genannten Stand der Technik bekannt.

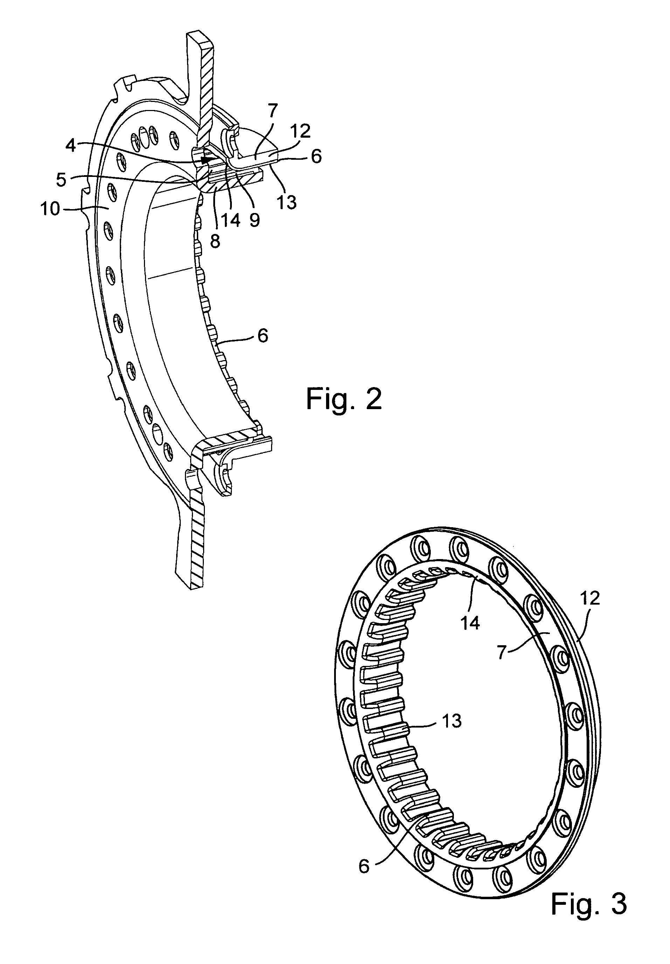

Die axiale Steckverbindung 1 a ist, wie in Zusammenhang mit Figur 2 erkennbar, durch eine Verzahnungsverbindung 4 gebildet, welche Verzahnungsprofile 5 und 6 aufweist, die ineinander greifen. In Figur 2 sind die Verzahnungsprofile 5 und 6 in einer relativen Position gezeigt, in der diese Verzahnungsprofile 5, 6 lediglich teilweise axial aufeinander geschoben sind.

Die Verzahnungsprofile 5 sind bei dem dargestellten Ausführungsbeispiel von einem flanschartigen Ausgangsteil 10 des Dämpfers 2 getragen, und die Verzahnungsprofile 6 von einem Mitnehmerring, der Bestandteil der getriebeseitig vormontierten Untereinheit 3 ist. Die Verzahnungsprofile 6 bilden eine Innenverzahnung, wohingegen die Verzahnungsprofile 5 eine entsprechend angepasste Außenverzahnung bilden. Bei dem dargestellten Ausführungsbeispiel werden die Verzahnungsprofile 5 von einem axialen Ansatz 8 des Ausgangsteils 10 getragen. Der axiale Ansatz 8 ist hier ringartig ausgebildet und axial in Richtung der Untereinheit 3 ausgerichtet. Die Verzahnungsprofile 5 können unmittelbar dem axialen Ansatz 8 angeformt sein oder aber, wie bei dem dargestellten Ausführungsbeispiel, durch ein separates Bauteil 9 gebildet sein, das fest mit dem axialen Ansatz 8 bzw. dem Ausgangsteil 10 verbunden ist. In vorteilhafter Weise kann das Bauteil 9 als Blechformteil ausgebildet und zumindest oberflächengehärtet sein. Die Bauteile 7 und 10 sind bei dem dargestellten Ausführungsbeispiel ebenfalls als Blechteile ausgebildet. Aus Figur 1 ist erkennbar, dass der Mitnehmerring 7 mit einem ringförmigen Mitnehmerbauteil 11 vernietet ist. Diese Vernietung kann mittels separater Nietelemente, wie dargestellt, erfolgen, oder es können aus zumindest einem der Bauteile 7 und 11 einstückige Nietwarzen herausgebildet werden, mittels derer die entsprechenden Nietverbindungen hergestellt werden können. Die Teile können auch verschweißt werden.

Das Mitnehmerbauteil 11 bildet einen Bestandteil der getriebeseitig vormontierbaren Untereinheit 3.

Der Mitnehmerring 7 ist als ringförmiges, im Querschnitt winkelförmiges Bauteil ausgebildet, wobei der axial hülsenförmige Bereich 12 hier unmittelbar die Verzahnungsprofile 6 bildet. Es könnte jedoch, ähnlich wie dies in Zusammenhang mit den Verzahnungsprofilen 5 beschrieben wurde, ein separates Bauteil verwendet werden.

Bei dem dargestellten Ausführungsbeispiel sind die Verzahnungsprofile 6 des Mitnehmerringes 7 mit einem dämpfenden Material 13 beschichtet. Dabei kann es zweckmäßig sein, wenn alle Verzahnungsprofile 6 eine entsprechende Beschichtung aufweisen. Für manche Anwendungsfälle kann es jedoch auch zweckmäßig sein, wenn lediglich einzelne, über den Umfang verteilte Verzahnungsprofile 6 eine derartige Beschichtung besitzen, wobei diese dann eine andere Form bzw. Teilung besitzen können als die übrigen Verzahnungsprofile 6 ohne Beschichtung. Bei einer derartigen Ausgestaltung kann es gar zweckmäßig sein, wenn die ineinander greifenden Verzahnungsprofile 5 und 6 ohne dämpfende Zwischenschicht zumindest ein geringes Verdrehspiel, zum Beispiel in der Größenordnung von 0,2 bis 0,5 Winkelgrad aufweisen. Für manche Anwendungsfälle kann es auch vorteilhaft sein, wenn dieser Verdrehwinkel größer ist oder aber praktisch kein Verdrehwinkel zwischen den ineinander greifenden Verzahnungsprofilen vorhanden ist.

Bei dem dargestellten Ausführungsbeispiel sind sowohl die Flanken als auch der Kopfbereich sowie der Fußbereich der Verzahnungsprofile 6 beschichtet. Es kann jedoch auch zweckmä-βig sein, lediglich die Flanken der Verzahnungsprofile 6 und gegebenenfalls den Fußbereich und/oder den Kopfbereich dieser Verzahnungsprofile 6 mit einem dämpfenden Material zu beschichten. Die Beschichtung der Verzahnungsprofile 6 kann in vorteilhafter Weise derart erfolgen, dass zwischen den Fußbereichen und/oder den Kopfbereichen der Verzahnungsprofile 5 und den diesen radial gegenüber liegenden, durch die Materialbeschichtung 13 gebildeten Kopfbereichen und/oder Fußbereichen der Verzahnungsprofile 6 zumindest ein geringes radiales Spiel verbleibt. In vorteilhafter Weise kann die Dicke der dämpfenden Materialbeschichtung 13 in Bezug auf die Verzahnungsprofile 5 derart abgestimmt sein, dass beim Aufeinanderschieben der beiden Verzahnungsprofile 5 und 6 zumindest eine geringe Verformung des Materials 13 auftritt. Für manche Anwendungsfälle kann es jedoch auch zweckmäßig sein, wenn ein geringes Spiel zwischen den einander zugeordneten Verzahnungsprofilen 5 und 6 vorgesehen wird, wodurch die Montage erleichtert wird. Um die Montage zu begünstigen, ist es besonders vorteilhaft, wenn vor dem Aufeinanderschieben der beiden Bauteile 10 und 7 bzw. der Verzahnungsprofile 5 und 6 zumindest die Oberfläche der Verzahnungsprofile 5 und/oder 6 mit einem Gleitwerkstoff, wie zum Beispiel Fett, Öl, Graphitpartikeln oder ähnlichem, beschichtet sind. Dadurch kann die Montage bzw. das Aufeinanderschieben der Verzahnungsprofile 5 und 6 wesentlich erleichtert werden und darüber hinaus auch eine Beschädigung der Materialbeschichtung 13 verhindert werden.

Aus Figur 2 ist ersichtlich, dass das Bauteil 7 derart ausgebildet ist, dass das dämpfende Material 13 eine die Montage erleichternde Einführkontur bzw. Positionskontur 14 bildet. Diese Kontur bildet auch einen axialen Anschlag zwischen den Bauteilen 7 und 10.

In besonders vorteilhafter Weise kann das die Beschichtung 13 bildende Material zumindest eine gewisse Eigenelastizität, also federnde Verformbarkeit, aufweisen. Diese Eigenelastizität bzw. Verformbarkeit gewährleistet eine Dämpfung der zwischen den beiden Bauteilen 10 und 7 auftretenden Drehschwingungen bzw. Drehmomentschwankungen. In vorteilhafter Weise kann das die Beschichtung 13 bildende Material zumindest aus einem Kunststoff bestehen, der, falls erforderlich, mit einem Gleitmaterial, wie zum Beispiel Polytetrafluoräthylen (PTFE), beschichtet sein kann. Der Kunststoff soll dabei, wie bereits angedeutet, zumindest eine gewisse Eigenelastizität bzw. Verformbarkeit besitzen. Besonders zweckmäßig kann es sein, wenn das die Beschichtung 13 bildende Material zumindest teilweise durch einen Elastomer, wie Gummi, gebildet ist. Der Gummi bzw. der Kunststoff soll vorzugsweise hochtemperaturbeständig sein, also Temperaturen von zumindest 100° C über längere Zeit widerstehen.

Die Schichtdicke der Beschichtung 13 kann in der Größenordnung von 0,3 bis 1,5 mm liegen. Für die meisten Anwendungsfälle ist es zweckmäßig, wenn diese Beschichtungsdicke in der Größenordnung von 0,8 bis 1,2 mm liegt, beispielsweise 1 mm beträgt. Zweckmäßig kann es auch sein, wenn die Schichtdicke über die umfangsmäßige Erstreckung der Verzahnungsprofile 6 unterschiedlich ist. So kann beispielsweise die Schichtdicke im Bereich der Flanken der Verzahnungsprofile 6 größer sein als im Bereich des Kopf- und/oder Fußdurchmessers dieser Verzahnungsprofile 6. Für manche Anwendungsfälle kann es auch zweckmäßig sein, wenn diese Verhältnisse umgekehrt sind.

Das die Beschichtung 13 bildende Material kann auf das entsprechende Bauteil, das hier durch den Mitnehmerring 7 gebildet ist, aufvulkanisiert sein. Für manche Anwendungsfälle kann es jedoch auch zweckmäßig sein, wenn das die Beschichtung 13 bildende Material ein separates Bauteil bildet, das entweder lose zwischengelegt wird bei der Montage, oder aber mit dem entsprechenden Bauteil, hier mit dem Mitnehmerring 7 fest verbunden wird. Letzteres kann beispielsweise mittels einer zumindest partiellen Verklebung und/oder durch entsprechende Ausgestaltung der Bauteile, welche eine formschlüssige Verbindung zwischen den zu verbindenden Bauteilen gewährleisten, erfolgen.

Bei dem dargestellten Ausführungsbeispiel ist das eine Beschichtung 13 bildende, dämpfende Material auf den Verzahnungsprofilen 6 vorgesehen. Es kann jedoch auch zweckmäßig sein, dieses dämpfende Material auf den Verzahnungsprofilen 5 oder gar sowohl auf den Verzahnungsprofilen 6 als auch auf den Verzahnungsprofilen 5 vorzusehen. Dabei können alle Verzahnungsprofile 6 und/oder alle Verzahnungsprofile 5 beschichtet sein oder aber lediglich einzelne, über den Umfang verteilte Verzahnungsprofile 5 und/oder 6. Die Verzahnungsprofile 5 und/oder 6 können jedoch auch gruppenweise über den Umfang verteilt mit einer entsprechenden Beschichtung 13 versehen werden. Auch kann es zweckmäßig sein, beschichtete Verzahnungsprofile 6 und beschichtete Verzahnungsprofile 5 über den Umfang verteilt vorzusehen, wobei die beschichteten Verzahnungsprofile 6 gegenüber den beschichteten Verzahnungsprofilen 5 umfangsmäßig zueinander versetzt angeordnet werden können.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und der Figurenbeschreibung sowie den Ansprüchen beschriebenen und in den Zeichnungen enthaltenen Merkmalen bzw. Elementen oder Verfahrensschritten gebildet werden können.

### Bezugszeichenliste

- 1: Antriebsverbindung
- 1 a: Steckverbindung
- 2: Untereinheit
- 3: Untereinheit
- 4: Verzahnungsverbindung
- 5: Verzahnungsprofile
- 6: Verzahnungsprofile
- 7: Bauteil
- 8: Axialer Ansatz
- 9: Bauteil
- 10: Bauteil
- 11: Bauteil
- 12: Hülsenförmiger Bereich
- 13: Dämpfendes Material
- 14: Einführkontur

## Patentansprüche

1. Kupplungsaggregat, das aus wenigstens zwei Untereinheiten besteht, wobei die eine Untereinheit mit der Abtriebswelle eines Motors verbindbar und die andere Untereinheit getriebeseitig vormontierbar ist und beide Untereinheiten über eine axiale Steckverbindung, die ineinander greifende Profilierungen und Gegenprofilierungen umfasst, miteinander koppelbar sind, **dadurch gekennzeichnet, dass** zumindest einzelne der die Profilierungen (5) und/oder Gegenprofilierungen (6) bildenden, zahnförmigen Profile mit einem dämpfenden Material (13) beschichtet sind.

2. Kupplungsaggregat nach Anspruch 1, **dadurch gekennzeichnet, dass** das dämpfende **Material (13) zumindest aus einem Kunststoff besteht.**

3. Kupplungsaggregat nach Anspruch 1 oder 2, **dadurch gekennzeichnet, dass** das dämpfende Material (13) zumindest durch einen Elastomer gebildet ist.

4. Kupplungsaggregat nach einem der Ansprüche 1 bis 3, **dadurch gekennzeichnet, dass** das dämpfende Material (13) aus einem hochtemperaturbeständigen Kunststoff gebildet ist.

5. Kupplungsaggregat nach einem der Ansprüche 1 bis 4, **dadurch gekennzeichnet, dass** die Schichtdicke des zumindest auf einzelne zahnförmige Profile (5, 6) aufgebrachte dämpfende Material (13) in der Größenordnung von 0,3 bis 1,5 mm, vorzugsweise in der Größenordnung von 0,8 bis 1,2 mm liegt.

6. Kupplungsaggregat nach einem der Ansprüche 1 bis 5, **dadurch gekennzeichnet, dass** die gesamten Profilierungen (5) und/oder die gesamten Gegenprofilierungen (6) beschichtet sind.

7. Kupplungsaggregat nach einem der Ansprüche 1 bis 6, **dadurch gekennzeichnet, dass** lediglich die Zahnflanken von zahnförmigen Profilen (5, 6) beschichtet sind.

8. Kupplungsaggregat nach einem der Ansprüche 1 bis 7, **dadurch gekennzeichnet, dass** das dämpfende Material (13) auf die entsprechenden zahnförmigen Profile aufvulkanisiert ist.

9. Kupplungsaggregat nach einem der Ansprüche 1 bis 8, **dadurch gekennzeichnet, dass** die Oberfläche des dämpfenden Materials (13) zumindest partiell mit einem Gleitmittel versehen ist.

10. Kupplungsaggregat nach Anspruch 1 bis 9, **dadurch gekennzeichnet, dass** alle zahnförmigen Profile der Profilierungen (5) und/oder Gegenprofilierungen (6) zumindest partiell mit einem dämpfenden Material beschichtet sind.
